(19)

Europäisches Patentamt
European Patent Office
Office européen des brevets

(11) **EP 4 174 775 A1**

(12) **EUROPEAN PATENT APPLICATION**

(43) Date of publication:
**03.05.2023 Bulletin 2023/18**

(51) International Patent Classification (IPC):
**G06T 7/579** (2017.01)

(21) Application number: **21205121.3**

(22) Date of filing: **27.10.2021**

(52) Cooperative Patent Classification (CPC):
**G06T 7/579**; G06T 2207/10004; G06T 2207/20084;
G06T 2207/30252

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicants:
• **TOYOTA JIDOSHA KABUSHIKI KAISHA**
**Toyota-shi, Aichi-ken 471-8571 (JP)**
• **Katholieke Universiteit Leuven**
**KU Leuven Research & Development**
**3000 Leuven (BE)**

(72) Inventors:
• **ABBELOOS, Wim**
**1140 BRUSSELS (BE)**
• **KUZNIETSOV, Yevhen**
**3000 LEUVEN (BE)**
• **PROESMANS, Marc**
**3000 LEUVEN (BE)**
• **VAN GOOL, Luc**
**3000 LEUVEN (BE)**

(74) Representative: **Cabinet Beau de Loménie**
**158, rue de l'Université**
**75340 Paris Cedex 07 (FR)**

(54) **PREDICTION METHOD; COMPUTER PROGRAM, READABLE MEDIUM, SYSTEM AND MOBILE MACHINE FOR IMPLEMENTING THE METHOD**

(57) Prediction method for iteratively predicting a depth map (DMj), scene description(s) (SDj) and/or a camera motion (CMj-1,j), based on a current image (Ij); wherein in adaptation iteration(s), the method comprises:
S40) acquiring sample(s) including a sample image (Is) acquired from the camera at a sample time point (ts), and at least one additional image (Ik) acquired from the camera at an additional time point (tk) different from the sample time point (ts);
S50) for each acquired sample, performing preparatory steps in view of adjusting parameters of at least shared layer(s)(SL), said shared layer(s) being shared layer(s) common at least to the scene description estimator (SDE) and to the depth map estimator (DME);
S60) adjusting parameters of at least the shared layer(s) (SL), based on value(s) of an adaptation loss function ($L_{adapt}$) calculated for said at least one sample.

A computer program, a readable medium, a system and a mobile machine for implementing the method.

FIG.5

```
                          Acquire a new image Ij                                  S10

                      Calculate camera motion CMj-1,j                             S20

          Is camera motion CMj-1,j higher than minimun threshold
   No                                                                             S22
          MinT and smaller than maximum threshold MaxT ?
                                    Yes

        Preparation of adaptation iteration                    S32
                           First iteration ?
                                                        No
                                      Has frozen iteration index fii reached Max_it ?
           S36        Yes      Yes                                 No
                                                                        S34        S30
        Initialize frozen iteration
        index fii = 0                    S38
        Set replicated scene description estimator to be
        latest version of scene description estimator

                      Constitute current sample.                                  S40
          Include one or more samples (PS1,PS2,PS3) from replay buffer

                   For each sample, perform preparatory steps                     S50
                                    No
          Adjust parameters of the shared layer(s) SL and optionally additional    S60
                              trainable unit(s)

                   Store current sample CS in replay buffer RB                     S70
                                                                                  S80
                        Calculation of depth map DMj                              S82
                     Calculation of scene description SDj                         S84
                   Calculation of camera motion CMj-1,j                           S86
```

EP 4 174 775 A1

**Description**

FIELD OF THE DISCLOSURE

The present disclosure concerns methods and systems capable of predicting depth maps and/or scene descriptions of a scene in front of which a system is moving, and/or capable of predicting the motion of the system relative to the scene (a scene description of a scene in the real world being a data structure comprising information characterizing the scene. It can be for instance a semantic map).

More specifically, the present disclosure concerns improving such methods and systems, so that they retain high-level performances, even when they are operated in different environments, called hereinafter different domains.

BACKGROUND OF THE DISCLOSURE

In the course of the development in particular of advanced driver assistance systems (ADAS) and autonomous driving systems, a variety of camera-based prediction systems have been developed which are capable, based on sequences of images acquired by the camera, to predict depth maps and/or scene descriptions of the scene in front of which the system is moving, and/or to predict the motion of the system relative to the scene.

In the present document, a map is a data structure in which data points are stored as pixels in an image along two lateral dimensions usually called the width and height, each data point or pixel comprising itself any type of information. A depth map of a scene based on an image of the scene acquired by a camera is a map in which each pixel comprises a value representative of the distance between the point of the scene represented by the considered pixel and the camera ((more specifically, the camera plane).

Most prediction systems developed so far include machine-learning based functional units. Such units are calculation units, which generally include neural networks, and which can be trained to acquire the capability to perform a desired function with a required level of performance.

Training these systems which include machine-learning based units presents in particular two difficulties.

On one hand, training machine-learning based units usually requires annotated datasets. Obtaining such datasets, which have to be annotated, debiased, etc., is extremely time-consuming and therefore costly.

To address this problem, some systems have been developed which are capable of unsupervised learning (see e.g. reference [6] below). Accordingly, the need to have annotated data sets is at least considerably diminished.

On the other hand, even when unsupervised learning is performed, existing systems have shown a limited cross-domain generalization capability.

That is, some of these systems may have satisfactory performances in the domain or domains on which they had been trained; however, their performance deteriorate considerably when they were operated in a new domain, for which they have not been trained.

This latter situation is particularly critical for autonomous driving systems because driving situations, or driving domains, are extremely varied: It seems therefore that training a system to all the possible driving domains is almost impossible.

The present invention has been developed in view of the problems described above.

The references below disclose several systems and methods that have been developed in the field of the above described systems, or in the broad field of machine-learning.

References:

[1] Tinghui Zhou, Matthew Brown, Noah Snavely, and David G.Lowe: "Unsupervised learning of depth and ego-motion from video", Proceedings of the IEEE Conference on Computer Vision and Pattern Recognition, pages 1851-1858, 2017.

[2] Yohann Cabon, Naila Murray, and Martin Humenberger. Virtual kitti 2, 2020.

[3] Clément Godard, Oisin Mac Aodha, and Gabriel J Brostow: "Unsupervised monocular depth estimation with left-right consistency", Proceedings of the IEEE Conference on Computer Vision and Pattern Recognition, pages 270-279, 2017.

[4] Andreas Geiger, Philip Lenz, Christoph Stiller, and Raquel Urtasun. Vision meets robotics: The kitti dataset. International Journal of Robotics Research (IJRR), 2013.

[5] Clément Godard, Oisin Mac Aodha, Michael Firman, and Gabriel J Brostow. Digging into self-supervised monocular depth estimation. In Proceedings of the IEEE/CVF International Conference on Computer Vision, pages 3828-3838, 2019.

[6] Vitor Guizilini, Jie Li, Rares Ambrus, and Adrien Gaidon. Geometric unsupervised domain adaptation for semantic segmentation. arXiv preprint arXiv:2103.16694, 2021.

[7] Ioffe, S., & Szegedy, C. (2015, June). Batch normalization: Accelerating deep network training by reducing internal covariate shift. In International conference on machine learning (pp. 448-456). PMLR.

[8] Zifeng Wu, Chunhua Shen, and Anton van den Hengel. Bridging category-level and instance-level semantic image segmentation. arXiv preprint arXiv: 1605.06885, 2016.

DISCLOSURE OF THE INVENTION

A purpose of the present disclosure is to propose methods and systems which are capable of predicting depth maps and/or scene description(s) of a scene in front of which a system is moving, and/or are capable of predicting the motion of the system relative to the scene, which retain high-level performances, even when they are operated in different domains, and which do not require the preparation of large size annotated training datasets.

In this purpose, the following method is proposed. This method is a computer-implemented prediction method for iteratively predicting a depth map, scene description(s) and/or a camera motion, based on a current image, and comprises iteratively:

S10) acquiring a current image of a scene in the real world from a camera at a current time point;
S80) performing at least one of the following steps:

S82) inputting the current image to a depth map estimator so as to output a depth map of the scene;
S84) inputting the current image to a scene description estimator so as to output scene description of the scene based on the current image;
S86) inputting the current image to a camera motion estimator, so as to output a camera motion of the camera between a past time point and the current time point;
a camera motion of the camera between a first time point and a second time point being a motion of the camera between a position thereof at the first time point and a position thereof at the second time point;

wherein in at least one iteration, called an adaptation iteration, the method comprises, after the acquisition step S10, performing steps of:

S40) acquiring at least one sample, said sample including a sample image acquired from the camera at a sample time point, and at least one additional image acquired from the camera at an additional time point different from the sample time point, said at least one sample including a current sample, which is a sample comprising the current image;

S50) for each acquired sample, performing preparatory steps in view of adjusting parameters of at least shared layer(s), said shared layer(s) being shared layer(s) common at least to the scene description estimator and to the depth map estimator, the preparatory steps comprising:

S51) inputting the sample image of the considered sample to the depth map estimator so as to output a depth map based on the sample image;

S52) for each additional image of the considered sample, calculating or acquiring a camera motion between the sample time point and the additional time point of the additional image;

S53) for each additional image of the considered sample, generating a reconstructed view for the sample image, based on the additional image;

a reconstructed view for the sample image representing a view of the scene as could be imaged by the camera from a position of the camera at the sample time point;
the reconstructed view for the sample image based on a certain additional image being calculated on the basis of the certain additional image, the depth map for the sample image, and the camera motion between the sample time point and the additional time point of the certain additional image; and

S54) calculating the value of an adaptation loss function for the considered sample, the adaptation loss function including an image reconstruction term that represents a per-pixel photoconsistency error between the sample image acquired at the sample time point and said at least one reconstructed view for the sample image generated based on the at least one additional image;

S60) adjusting parameters of at least the shared layer(s), based on value(s) of the adaptation loss function calculated for said at least one sample.

In the present document, the following notations or conventions are used:

The word 'term', even in the singular form, may refer to a sum of a plurality of terms.

When a noun is written followed by '(s)', it means that the object or item indicated by the noun can be in the singular or plural form. Accordingly, the expression 'object(s)' means 'at least one object'. Furthermore, a sentence like 'Object(s) are present' includes the singular form, that is, it encompasses the case where a single object is present. 'Property(ies)' means 'property or properties'.

The term "comprising a" should be understood as being synonymous with "comprising at least one" unless otherwise stated.

In the above definition, acquiring an image from a camera means acquiring an image, based on a raw image outputted by the camera. Acquiring the image from the camera may imply applying a pre-processing to the raw image (resizing, cropping, changing contrast, etc., and/or very broadly any pre-processing that can be applied to an image), and then inputting the pre-processed raw image as the image acquired from the camera.

In the above definition, more broadly acquiring a datum means obtaining the datum from a source of information, e.g. from a sensor, a memory storage or the like, internal or external.

A sample is a set of input images (these images being normally similar to each other) which can be inputted to the depth map estimator, the scene description estimator and the camera motion estimator in order to calculate predicted values of the depth map, the scene description and the camera motion.

Importantly, the above-defined prediction method comprises adaptation iterations. During these iterations, at least the shared layer(s), and possibly additional machine-learning based units (called altogether 'the trainable units') are trained, on the basis of the current sample (and optionally on the basis of past sample(s)).

Consequently, during the adaptation iterations, the trainable units are trained on images which correspond to the current domain from which images are acquired. Therefore, the trainable units are trained to the current domain; for this reason, the predictions (the scene descriptions, the depth estimations, the camera motions) outputted thanks to the method retain a high level of performance, even when they are applied to new domains. This is due in particular to the fact that, since the shared layer(s) are common to the depth estimation head and the scene description head, the adaptation of its weights to the current domain not only benefits to the performance of the depth estimation and the camera motion estimation, but also to the scene description estimation.

Moreover, no annotated data are needed to carry out the training during the adaptation iterations.

For these reasons, the proposed method makes it possible to realize online unsupervised domain adaptation, which imposes much fewer requirements for cross-domain deployment of the method, as compared to existing methods where training is only performed off-line.

In particular, in contrast with known unsupervised online adaptation methods, the proposed method does not require "training" in target domain whatsoever. In other words, other unsupervised domain adaptation methods may tackle well switching to new domain, but they need to be trained beforehand on any new domain before any operation on a new domain. On the other hand, thanks to the proposed on-line training, the proposed prediction method can be used to tackle dynamically changing domains/environments.

Moreover, advantageously, not only the shared layer(s), but also other machine-learning based units which are part of the depth map estimator, the scene description estimator, and/or the camera motion estimator may be trained by this method, during the adaptation iterations.

As mentioned above, a scene description of a scene in the real world is a data structure comprising information characterizing the scene.

A scene description can be various types of data structures.

In some embodiments, a scene description of a scene outputted by the scene description estimator (based on an image) is a data structure comprising data associating information relative to point(s) in the scene with pixel(s) of the image. For instance, such a scene description can comprise a map, generally having the same resolution (that is, the same height and width) as the image. In this case for instance, for several (or for all) pixels of the image, the scene description comprises information relative to point(s) of the image which correspond to said pixel(s) of the image, and this information is stored in pixels of the map which are associated respectively with said pixels of the image.

In these embodiments, the scene description(s) based on an image outputted by the scene description estimator may include a normal map of the image and/or a semantic map of the image.

A normal map of an image is a map comprising for each one of pixel(s) of the map, a datum defining a direction of a line perpendicular to the surface of an object present in the scene at a point of the scene which corresponds to the considered pixel.

A semantic map is a map which indicates for each pixel a class, called a semantic class, to which the pixel belongs or may belong, and optionally a probability of the pixel to belong to that class. In some embodiments, the semantic map comprises, for each pixel, for each one of predetermined semantic classes, a probability of the pixel to belong to that semantic class.

Accordingly, when the scene description is a semantic map, the describing value for a pixel may contain either the name of a semantic class, and optionally a probability for the pixel to actually correspond to that class; the describing value may also contain a list of respective probabilities for the pixel to correspond to respective semantic classes.

Moreover, in these embodiments, a scene description of a scene outputted by the scene description estimator is a map comprising, for each pixel of the map, at least a predicted probability for a point in the scene corresponding to the considered pixel to take up a certain value, or comprises predicted probabilities for said point in the scene to take up respectively certain values. The value(s) for which probabilities are predicted may be either predetermined or calculated. The scene description is of course established so that there is a known correspondence between the pixels of the image from which the map is derived, and the pixels of the map. Usually, the image and the map have the same resolution, whereby each pixel of the map corresponds to a corresponding pixel of the image.

The performances of the prediction model can be improved by including some additional terms in the adaptation loss function $L_{adapt}$.

In this purpose, in some variants of the above embodiments calculating the value of the adaptation loss function for a considered sample at step S54 includes:

inputting the sample image to the scene description estimator so as to output a scene description of the scene based on the sample image;
determining a high-confidence set, comprising pixels of that scene description based on the sample image for which at least one predicted probability is above a threshold (said threshold being predetermined or calculated); and
calculating a regularization term based on probabilities predicted for the pixels of the high confidence set;

the adaptation loss function $L_{adapt}$ includes the regularization term; and
the regularization term is defined so that during the adjustment step S60, the parameters are adjusted so as to increase the highest predicted probability, for each pixel of the high confidence set (X).

The pixels of the scene description which belong to the high-confidence set are called herein high confidence pixels.

Advantageously, the confidence regularization term is calculated only based on predictions based on the sample image, and consequently, does not require ground truth information coming from an annotated dataset.

Various functions can be used to define the confidence regularization term.

Preferably, the confidence regularization term is obtained by applying a function to the confidence level (that is, the highest probability) of the high-confidence pixels. This function is preferably a function which is monotonous at least in the interval where the confidence levels are defined. For instance, this function can be a minus logarithm function.

In addition, different options are available to train the prediction system during the adaptation iterations using the confidence regularization term.

In some embodiments, during each adaptation iteration, at step S54 the confidence regularization term is calculated based on a latest instance of the scene description estimator, adjusted during the latest adaptation iteration.

In alternative embodiments, the method comprises a step (S38) of setting a replicated scene description estimator to be a latest instance of the scene description estimator, adjusted during the latest adaptation iteration; during step S54 of each adaptation iteration, the regularization term is calculated based on the replicated scene description estimator; and a plurality of adaptation iterations are performed between two successive performances of the replicated scene description estimator setting step S38. Advantageously, the performance of these latter embodiments can be improved, compared with embodiments in which the regularization term is not used.

Besides, depending on the embodiment, the prediction method may be applied to predict one scene description, or more.

Accordingly, in some embodiments, the scene description estimator comprises at least one scene description heads; and step S84 comprises: inputting the current image to the scene description estimator; transmitting data obtained on the basis of the inputted current image to the shared layer(s); processing said transmitted data with the shared layer(s) to so as to output an image latent feature; and processing said image latent feature through said at least one scene description heads to yield said scene description(s). In some embodiments, the data obtained on the basis of the inputted current image and transmitted to the shared layer(s) is the current image itself; in other embodiments, it is data obtained by pre-processing the current image through for instance an upstream calculation unit provided upstream the shared layer(s).

For instance, the scene description heads can comprise a normal map estimation head and a semantic map estimation head.

In order to avoid various problems from happening during training, such as overfitting and/or catastrophic forgetting, it may be useful in some cases to include 'past sample(s)' in the samples used for training.

Such past samples are samples which normally include images acquired a certain time before the current image (e.g. 10 seconds).

Using such past samples has been proved to be beneficial for the training.

The past samples are typically stored in a memory called replay buffer or experience buffer, from which they are retrieved during training.

Accodingly, in some embodiments of the prediction method, the sample acquisition step S40 includes acquiring at least one past sample;

each past sample including a sample image acquired from the camera at a sample time point, and at least one additional image acquired from the camera at an additional time point different from the sample time point;

in each of the at least one past sample;

at step S50, the preparatory steps are executed for each past sample that has been acquired at step S40; and
at step S60, the parameters of at least the shared layer(s) are adjusted further based on the value(s) of the loss function calculated for the said at least one past sample.

Advantageously in these embodiments, during the adaptation iterations, one or more past samples is used to train the trainable units, in addition to the current sample. Accordingly, the experience from the past stored in previously acquired images is leveraged by using said past sample(s). It has been observed indeed that using the past samples during the adaptation iterations effectively mitigates the consequences of overfitting, prevents catastrophic forgetting, etc., and thus stabilizes the training of the trainable units.

In some embodiments of the prediction method, the camera motion estimator is a machine-learning based unit; and the method comprises, at said parameters adjustment step S60, further adjusting parameters of the camera motion estimator.

The proposed method is a method to iteratively predict a depth map, scene description(s), and/or the motion of the camera relative to the scene, typically during normal operation of a mobile machine on which the camera is mounted. Consequently, it is an operational method, to be used for obtaining successive data, which can be used for instance to control the machine on which the camera is mounted or for any other purpose. For instance, the camera may be mounted on a vehicle or a robot, and the method is carried out to obtain successive depth maps and semantic maps of the environment of the vehicle or robot, while the vehicle or robot is moving (in the case where the scene descriptions are semantic maps). The method can for instance be used to obtain depth maps and semantic maps for a vehicle moving on a road, in order to perform partial or fully automated driving of the vehicle.

Although the above-defined method only mentions executing at least in one adaptation iteration, in order to train (at least) the shared layer(s), it is preferable to perform adaptation iterations repeatedly. Therefore, in the above method, the adaptation iterations are preferably carried out multiple times; for instance, at each iteration. The adaptation iterations can also be triggered based on some event; for instance when it is detected that the accuracy of the depth detection has fallen below a minimum threshold or the like.

In the method, a sample preferably comprises exactly two additional images: It has been observed indeed that this offers a good performance/computation time ratio.

Preferably, the additional images can be selected so that the sample image and the additional images form a sequence of images consecutively acquired from the camera.

In this case, in the case where moreover the samples include exactly two additional images, preferably in the samples of an adaptation iteration, the sample image is the image acquired at the intermediate time point, that is, one of the two additional images is the image acquired immediately before the sample image, and the other additional image is the image acquired immediately after the sample image.

In a particular implementation, the proposed method is determined by computer program instructions.

Accordingly, another purpose the present disclosure is to propose one or more computer program(s) comprising instructions which, when the instructions are executed by a computer, cause the computer to carry out the steps of one of the afore-mentioned prediction methods, in accordance with the present disclosure. The computer program(s) may use any programming language, and be in the form of source code, object code, or code intermediate between source code and object code, such as in a partially compiled form, or in any other desirable form. The computer may be any data processing means, for instance one or more personal computer(s), one or more processors, one or more remote servers, etc. It can be made up of a single machine or a plurality of machines, for instance spread over different locations.

The present disclosure also includes a non-transitory computer readable medium, having the above defined one or more computer program(s) stored thereon. The computer-readable medium may be an entity or device capable of storing the program. For example, the computer-readable medium may comprise storage means, such as a read only memory (ROM), e.g. a compact disk (CD) ROM, or a microelectronic circuit ROM, or indeed magnetic recording means, e.g. a floppy disk or a hard disk.

The present disclosure also includes a computer-implemented prediction system for iteratively predicting a depth map, scene description(s) and/or a camera motion, based on a current image; the prediction system comprising one or more processors the above-defined computer-readable medium.

The present disclosure can for instance be implemented in a mobile machine, for instance a vehicle or a robot, comprising a camera and the above-defined computer-implemented prediction system, the computer-implemented prediction system being configured to acquire images from the camera.

BRIEF DESCRIPTION OF THE DRAWINGS

The present invention may be better understood and its numerous other objects and advantages will become apparent to those skilled in the art by reference to the accompanying drawing wherein like reference numerals refer to like elements in the several figures and in which:

Fig.1 is a schematic view of a vehicle on which a prediction system according to the present disclosure is mounted;
Fig.2 is an exemplary image inputted by the system of Fig.1 to predict a depth map;
Fig.3 is an exemplary depth map outputted by the system of Fig.1 after inputting the image of Fig.2;
Fig.4 is a bloc diagram illustrating the steps of a prediction method in a first embodiment of the present disclosure;
Fig.5 is a bloc diagram illustrating the steps of a prediction method in a second embodiment of the present disclosure;
Fig.6 is a schematic view illustrating exchanges of data when a prediction method according to an embodiment of the present disclosure is performed.
Fig.7 is a schematic view illustrating exchanges of data when a prediction method according to the present disclosure is performed.
Fig.8 is a schematic view illustrating exchanges of data when a prediction method according to the present disclosure is performed.
Fig.9 is a schematic view illustrating exchanges of data when a prediction method according to the present disclosure is performed.

DESCRIPTION OF PREFERRED EMBODIMENTS

Embodiments of methods and systems according to the present disclosure will now be presented.

They will be presented in the case where the images are acquired by camera(s) mounted on a car. It should be understood that the present disclosure can be applied to many types of mobile machines on a camera can be mounted. The mobile machine can be a road, aerial, or marine vehicle, manned or unmanned; it can for instance be a mobile robot.

Material architecture

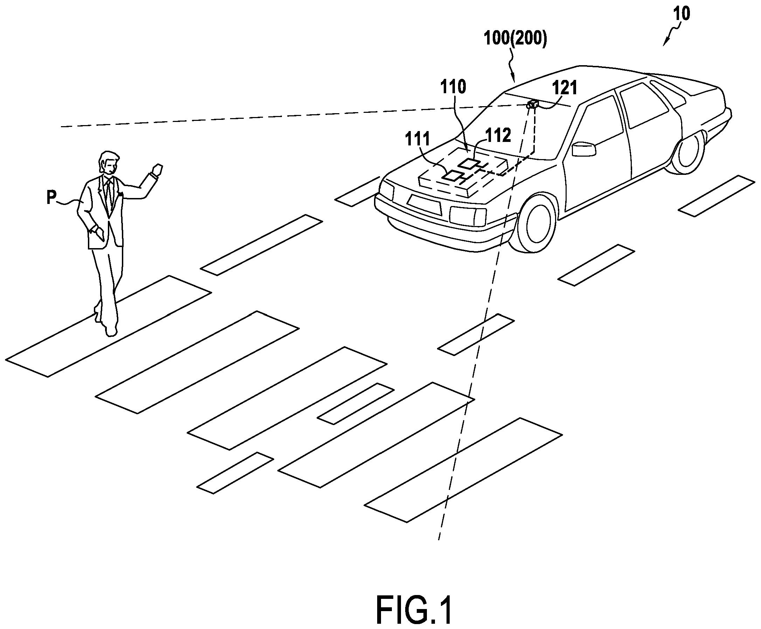

A vehicle 10 (a car, as an example of a mobile machine, which is a vehicle, but also a robot if the car is a fully autonomous vehicle) on which a prediction system 200 according to the present disclosure is mounted will now be presented in relation with Fig.1.

On Fig.1, vehicle 10 is represented on a road, in front of a pedestrian crossing on which a pedestrian P is crossing the road.

Vehicle 10 includes an automated driving system 100. The automated driving system 100 ("system 100') can be an advanced driving assistance system (ADAS), or a fully autonomous driving system capable of handling alone all driving tasks, at least in certain operational design domains. That is, driving system 100 can be configured to provide any level of automation, i.e. it can be ranked from any level from 1 to 5 according to norm SAE J3016_201806.

System 100 comprises a central driving computer 110, a set of sensors, each sensor being connected to computer 110, and various other components.

Most components of system 100 are shared components, which are used to perform multiple tasks. That is, the components of the vehicle driving system 100 perform the functions of system 100, but may also perform other functions in vehicle 1. System 100 includes in particular a computer-implemented prediction system 200 ("system 200') according to the present disclosure, which is implemented by the central driving computer 110 ("computer 110').

Although computer 110 is represented on Fig.1 in a single box, it may comprise one or more processors, and can therefore be a distributed calculation system, distributed over a plurality of processors, possibly physically arranged on different locations (including remote locations, using wireless connections).

The set of sensors comprises in particular sensors configured to perceive an external environment of vehicle 10. In this purpose, it comprises several cameras 120. Only one of these cameras 120, the front camera 121, is represented on Fig.1. The cameras 120 also comprises lateral cameras and a back camera, as know per se, which are not represented on Fig.1. Cameras 120 are configured to acquire images of the environment of vehicle 10, on 360° around it, at successive time steps.

The functions (the functional units) of system 100 are implemented on the computer 110.

Computer 110 comprises a non-transitory storage medium 111 and one or more processor(s) 112.

The computer 110, in particular in its storage medium 111, stores instructions which when executed by the one or more processor(s) 112 cause the one or more processor(s) 112 to implement the different functional units or functions of system 100.

The one or more processors 112 are intended to be representative of the presence of any one or more processors or processing devices, of any of a variety of forms.

A computer program to perform driver assistance tasks and/or driving tasks, configured in particular to iteratively predict a depth map, scene description(s) and/or a camera motion, according to the present disclosure, is stored in storage medium 111. This program, and the storage medium 111, are examples respectively of a computer program and a computer-readable recording medium pursuant to the present disclosure.

The memory 103 of the computer 110 indeed constitutes a recording medium according to the invention, readable by the one or more processor(s) 112 and on which said program is recorded.

Functional architecture

The prediction system 200, or 'system 200', is configured to predict depth maps Dj, scene descriptions SDj, and/or camera motion estimations CMj, at successive time points tj, based on an image (a 'current image' Ij) acquired at time point tj. Depending on the implementation, one or more of these data can be output by system 200 at each time point.

The successive time points tj (tj = t0, t1, ... tn) usually correspond to successive acquisitions of camera 121.

These functions are realized by acquiring an image outputted by camera 121 at each of these time points. In this image, each pixel represents a point of the scene in the real world, as captured in the image by camera 121.

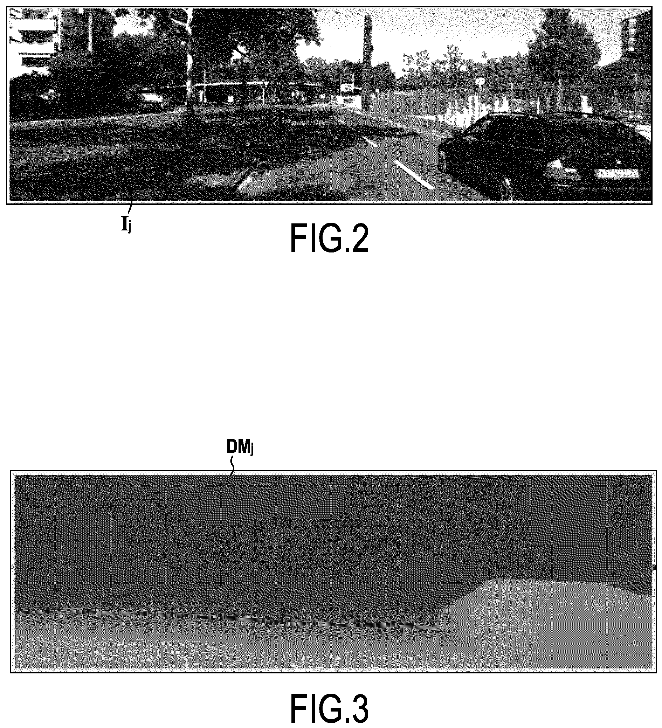

The image outputted by the camera is transmitted at each time step in real time to system 200. Fig.2 shows an exemplary image Ij, acquired at a time point tj.

Based on the image Ij acquired at time point tj, system 200 can output in particular a depth map Dj of the scene shown on image Ij, as shown on Fig.3. In the depth map Dj, the lighter the colour of a pixel, the closer the point represented by the pixel, relative to the camera.

Different data structures may be used for the data constituting the depth map and the scene description(s).

For instance, the depth map or one of the scene description(s) can be an image (a prediction image), in which each pixel has a fixed value, which is the predicted value (i.e., a predicted depth or a predicted semantic class) for the point in the scene of the real world to which the pixel corresponds.

In other embodiments, the depth map or the scene description(s) (or both) is a pair of images, namely, a prediction image and a confidence image. In this case, each pixel of the prediction image represents a predicted value, and the corresponding pixel in the confidence image represents a predicted confidence level for the pixel to have that predicted value.

In other embodiments, in which a scene description is a semantic map, a probabilistic description is used. In this case for example, the scene description can include one image for each semantic class, and in each of these images associated with the different semantic classes, for each pixel, the value of the pixel is an estimated probability for the point of the scene corresponding to the pixel to belong to the considered semantic class.

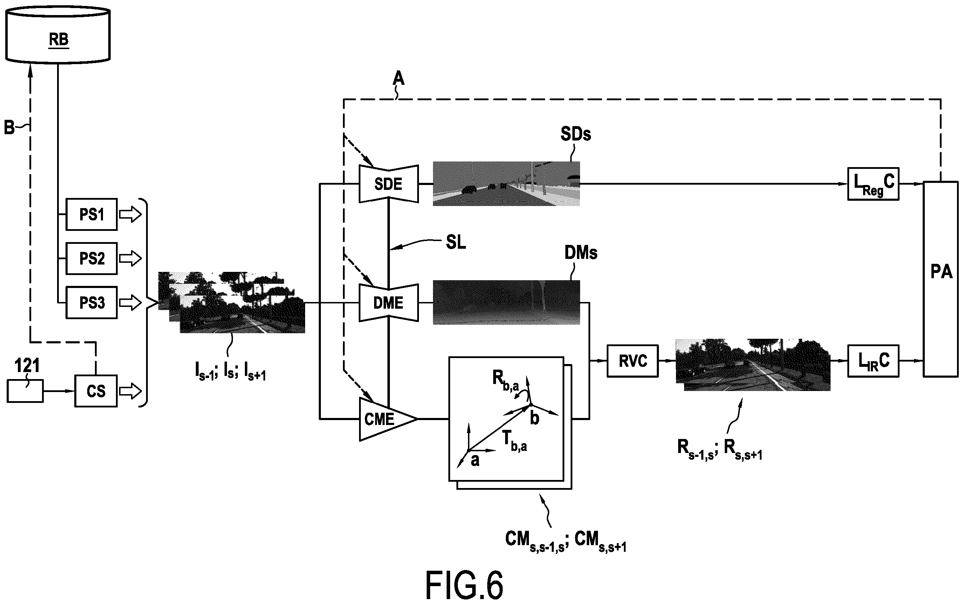

For instance, as in the embodiment illustrated by Fig.6, the scene description is a segmentation map, established for a predetermined set of semantic classes. Accordingly, each pixel contains a set of probabilities (or probability values) representing the respective predicted probabilities for the point of the image Ij represented by the pixel to belong to the respective semantic classes. For instance, if the scene is an urban landscape, the semantic classes can be: 'road', 'building', 'pole', 'traffic light', 'traffic sign', 'vegetation', 'terrain', 'sky', 'car', 'truck'.

In order to predict the depth maps, camera motions and scene descriptions, system 200 mainly comprises the following functional units: a scene description estimator SDE, a depth map estimator DME and a camera motion estimator CME. System 200 further comprises other calculations units, which will be described later on.

Importantly and advantageously, the method of the present disclosure is model-agnostic. That is, although exemplary architectures are presented below for the above-mentioned functional units, the method of the present disclosure can be applied to other architectures as well.

In the present embodiment, the scene description estimator SDE, the depth map estimator DME and the camera motion estimator CME are machine-learning based units. Accordingly, these units are called hereinafter 'the trainable units'.

Each of these trainable units can for instance be constituted essentially by a multi-layer convolutional neural network, for instance a residual neural network or ResNet, such as typically a ResNet18.

For instance, as depth map estimator DME and camera motion estimator CME, the neural networks proposed by reference [5] to calculate depth maps and estimate camera motions can be used.

As scene description estimator (in the present case, the scene description estimator is configured to output a single scene description, which is a semantic map), the same architecture as the depth map estimator DME is used, wherein however the last layer is modified: the number of output channels is set to be equal the number of semantic classes. In addition, in contrast with the neural networks proposed by reference [5], the sigmoid activation function is replaced by a softmax function.

In addition, the scene description estimator SDE, the depth map estimator DME and/or the camera motion estimator CME preferably include batch normalization layer(s). For instance, normally encoder(s) of this or these units will include normalization layers at several places.

During on-line training, that is, during the adaptation iterations, these batch normalization layers remain in "train mode", that is, they contribute to updating moving average batch normalization statistics in the way explained by reference [7].

As an input, each of the trainable units receives at an iteration or loop of index i an input image Ij, for the loop i=j. This image is processed by the trainable units (steps S82, S84 and S86) of the prediction method.

Accordingly, on the basis of the inputted image Ij, the trainable units output respectively a scene description SDj (in the present case, a semantic map); a depth map DMj; and a camera motion estimation CMj-1,j, which is calculated between the previous time point tj-1 and the current time point tj.

Importantly, the trainable units comprise shared layer(s) SL.

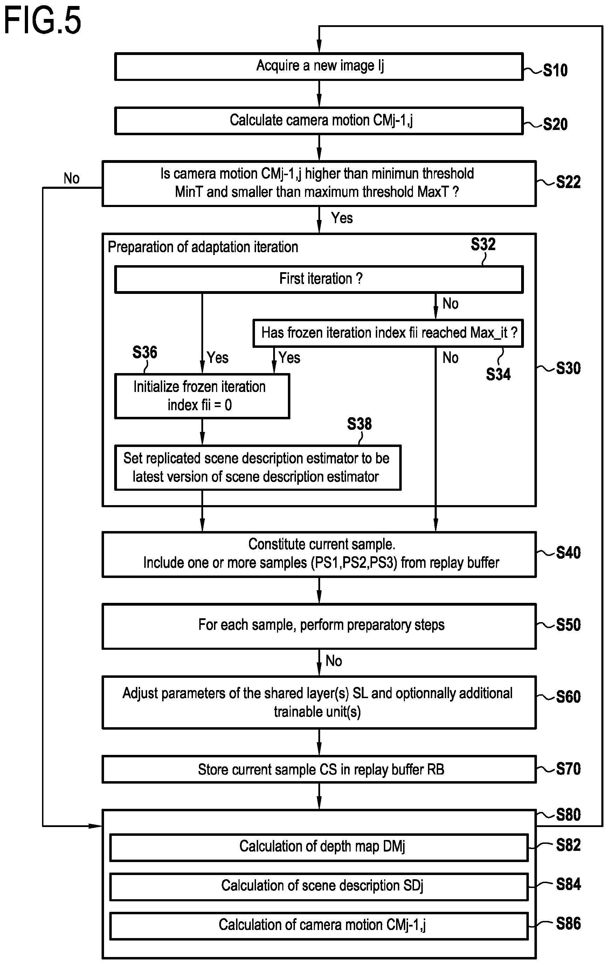

A shared layer is a layer of neural networks units which is common to two or more neural network units. According to the present disclosure, the shared layer SL is formed between at least the scene description estimator SDE and the depth map estimator DME. In the embodiment of Fig.5, it is also common to the camera motion estimator CME.

Each trainable unit may comprise additional calculation units, either upstream or downstream (relative to the direction of the flow of data during inferences), which are not part of the shared layer(s). These units can be machine-learning based units or not. Such calculation units, when they are configured to receive the output of the shared layer(s), are called heads. For instance, the scene description estimator may comprise several scene description heads, configured respectively to compute several scene descriptions.

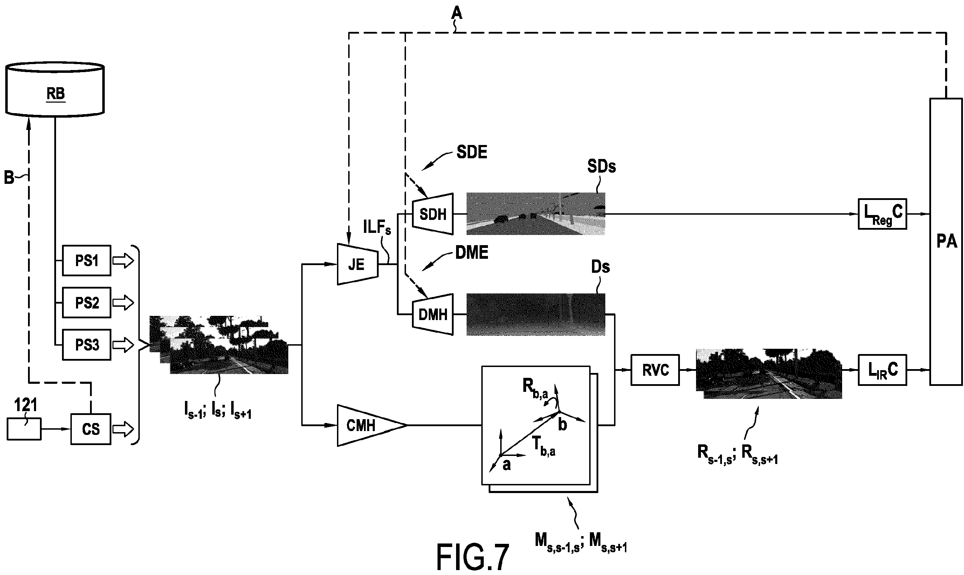

Many possibilities can be considered to implement the global architecture shown on Fig.6, in order to implement the present disclosure. Three such possibilities are shown on Figs.7, 8 and 9. Unless indicated otherwise, the features of the prediction system 200 represented on Figs.7, 8 and 9 are identical to the feature of system 200 presented in relation with Fig.6. In addition, for sake of simplicity, the same reference sign is used throughout Figs.6-9 to designate elements having the same or similar function or structure in the systems 200 of these different figures.

In the embodiment shown on Fig.7, the scene description SDE and the depth map estimator DME comprise a joint encoder JE, which constitutes the shared layers. The scene description SDE further comprises a scene description head SDH, while the depth map estimator DME further comprises a depth map head DMH.

In this embodiment, at each time step tj the acquired image Ij is received by the joint encoder JE, which processes the image and outputs an image latent feature ILFj. This image latent feature ILFj is then transmitted to both the scene description head SDH and the depth map head DMH, which process this datum and output respectively a scene description SDj and a depth map DMj.

For predicting the camera motion, the camera motion estimator CME is configured to output estimates of a motion of camera 121 between two frames or images acquired from camera 121.

More precisely, based on a pair of images Ij-1 and Ij, the camera motion estimator CME is configured to predict a camera motion Mj-1,j between these two images Ij-1 and Ij. More broadly, the camera motion estimator CME is configured to predict a camera motion Ms,k between a first image Is acquired at a time point ts, and a second image Ik acquired at a time point tk.

The camera motion estimator CME can preferably be an encoder followed by several convolution layers, without any upscaling. This encoder may preferably be constituted essentially by a ResNet, for instance a ResNet18, for instance modified to accept a pair of color images (or six channels) as input.

The camera motion Ms,k includes information defining (or sufficient to determine) the translation $T_{a,b}$ of the camera between the locations a and b of the camera respectively at time points ts and tk, and the rotation $R_{a,b}$ of the camera between time points ts and tk.

An example of a camera motion architecture, which can be used for the camera motion estimator, is for instance disclosed by reference [1].

In addition to the trainable units, system 200 further comprises other calculations units which are used during the adaptation steps. These units will be described when describing the training operations below.

The specific feature of system 200 of Fig.7 is that the joint encoder JE (an example of shared layer(s)) is shared between the scene description estimator SDE and the depth map estimator DME.

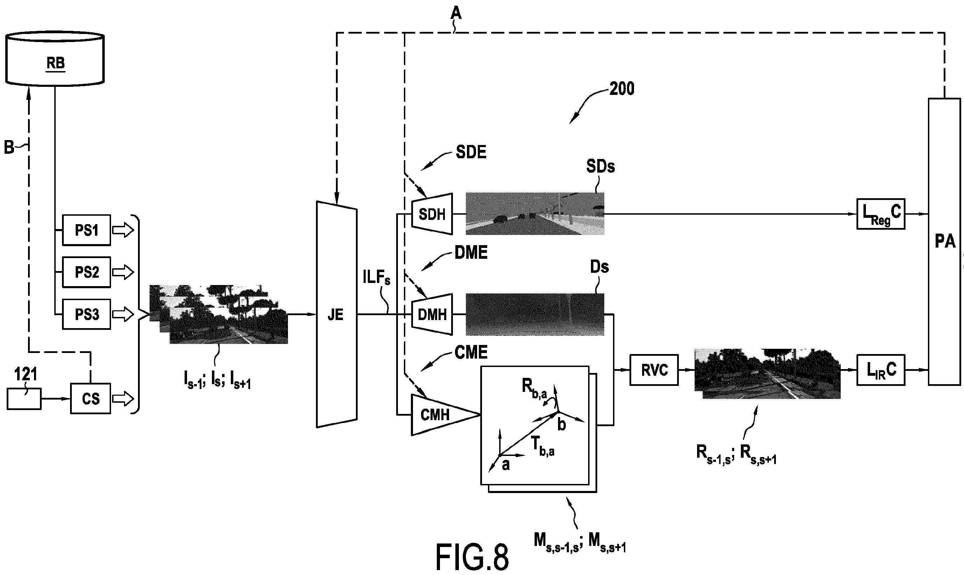

By contrast, in the system 200 of Fig.8, the joint encoder JE constitutes shared layers shared between all the trainable units, that is, shared between the scene description estimator SDE, the depth map estimator DME and the camera motion estimator CME. Consequently in this case, the camera motion estimator CME is constituted by the joint encoder JE, and a camera motion estimation head CMH. The input of the camera motion estimation head CMH is the image latent feature ILFs outputted by the joint encoder JE. The camera motion estimation head is configured to input the image latent feature ILFs and, based on this input, to predict the motions of the camera (Predicting a motion CMs,k of the camera between two time points ts and tk will be based on the image latent feature ILFs and ILFk outputted at time points ts and tk).

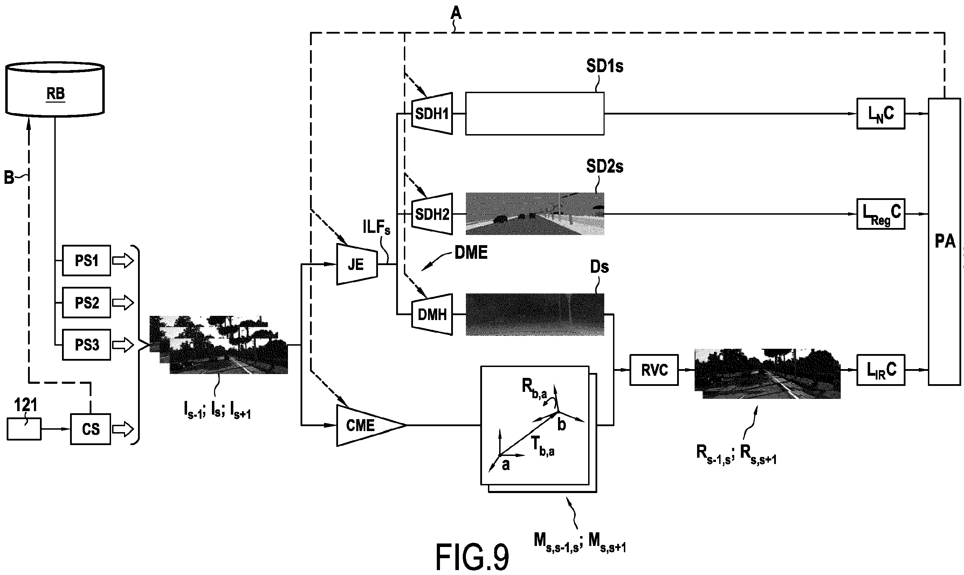

Finally, the system 200 shown on Fig.9 is similar to the system 200 of Fig.7, but instead of a single scene description head SDH, it comprises two scene description heads SDH1 and SDH2.

Each of these scene description heads SDH1 and SDH2 (as well as the depth estimation head DEH) is configured to receive the image latent feature ILFs outputted by the joint encoder JE as an input. On this basis, each of these scene description heads SDH1 and SDH2 predicts, at each iteration of the algorithm, a scene description.

In this embodiment, the first scene description head SDH1 is configured to output a scene description which is a map of normals or normal map. This map comprises, as a characterizing feature for each pixel of the normal map, the direction (represented by a 3-coordinates vector) of the line perpendicular to the surface of the represented object at the point in the scene which corresponds to the considered pixel.

The second scene description head SDH2 is substantially identical to the scene description head SDH of system 200 (Fig.5), and accordingly is configured to output a semantic map of the scene.


Training and operation

The operations performed to train and operate a prediction system according to the present disclosure are now going to be presented in the case of system 200 of Fig.5.

Training the prediction system 200 may comprise two phases: A first training or 'pre-training', carried out offline, and an on-line training, carried out during operation, that is, while system 200 is exploited to iteratively calculate predictions.

In a system according to the present disclosure, during exploitation, at least the shared layer(s) is a machine-learning based unit, which has to be trained (step S60 of the method, during the adaptation iteration(s)).

By contrast, the other functional units of the prediction system can either be a machine-learning based functional units, or a conventional calculation modules coded using explicit functions.

When one of these other units is a machine-learning based functional unit, it can be trained or not respectively during pre-training and during on-line training, depending on the implementation. When one of these other units is not trained, it means that a pre-trained version of the functional unit is used.

For instance, for training the prediction system 200 of Fig.6, the scene description head, the depth estimation head and/or the camera motion estimator may all be trained, both during the pre-training and during the on-line training (these two training phases will be described below). Conversely in the embodiment of the prediction system shown on Fig.7, the scene description head SDH may be pre-trained to perform image segmentation, and in this case is not trained online.


Off-line pre-training

The pre-training constitutes a first training phase for the prediction system, which is carried out off-line. This pre-training phase is carried out using a training dataset called the source dataset Ds, which is a fully annotated dataset prepared beforehand.

For this pre-training, any loss function suitable to train the trainable units can be used.

For instance, in the present embodiment, in which the scene description estimator SDE is a semantic map estimator, configured to output a semantic map, the following training loss function $L_{train}$ is used:

$$L_{train} = L_{IR} + \alpha \, L_S$$

This loss function $L_{train}$ comprises two terms: An image reconstruction term $L_{IR}$ and a semantic segmentation term $L_S$.

The image reconstruction term $L_{IR}$

In order to calculate the image reconstruction term $L_{IR}$, which constitutes the key supervision signal of the loss function, it is necessary to perform a task of novel view synthesis.

In the specific context of the present disclosure, where all the images of the scene are acquired by the same camera ("monocular vision'), this task consists, for a considered image Is of the scene (at a certain time point ts), in synthetizing a synthetic view of the scene Rs,k, the 'reconstructed view', which represents the scene as it could have been imaged by the camera at the time point ts, based on another image Ik acquired by the camera at another time point tk different from time point ts at which the considered image Is was acquired.

In order to calculate the reconstructed view Rs,k, for an image Is (the 'sample image'), based on this other image, the 'additional image' Ik, the following data are necessary:

- the additional image Ik, acquired at an additional time point tk,
- the camera motion Ms,k between the sample time point ts and the additional time point tk, and
- the depth map Ds at the sample time point ts.

In this purpose, in order to calculate the reconstructed view Rs,k, the depth map DMs is predicted (i.e., calculated) by the depth map estimator DME, and the camera motion CMs,k is calculated by the camera motion estimator CME.

Based on the data listed above, the reconstructed view Rs,k of the scene at the sample time point ts, based on the image Ik acquired at said other time point tk, can then be calculated as follows:
In the reconstructed view Rs,k, the value of a pixel pT of Rs,k is calculated in two steps.

First, a position of the pixel pT in the additional image Ik is calculated, taking into account the motion Ms,k of the camera between the timings ts and tk, and the depth map Ds for the timing ts. Accordingly, the position of the pixel pT in the additional image Ik is calculated based on the camera motion Ms,k, and the depth map Ds.

Then, using bilinear interpolation, a theoretical pixel value at this calculated position in the additional image Ik is calculated. This later pixel value is therefore used at a pixel value at pixel pT in the reconstructed image Rs,k. This process is explained in detail in reference [1]. A detailed presentation of this operation can be found in reference [5].

Importantly, a reconstructed view Rs,k calculated in this way is a differentiable function of the camera motion- and the depth- estimations: It can therefore be used to adapt (or to train) the camera motion- and the depth- estimators.

In order to calculate the image reconstruction term $L_{IR}$, at least one reconstructed view Rs,k is necessary. For this reason, a minimum sample to calculate the image reconstruction term $L_{IR}$ must comprise a sample image Is and at least one additional image Ik.

In practice, in order to calculate the image reconstruction term $L_{IR}$, a reconstructed view Rs,k is calculated for each additional image Ik of the sample. This calculation is performed by a reconstructed view calculation unit RVC.

Once the reconstructed view(s) has/have been calculated, the image reconstruction term $L_{IR}$ is calculated by an image reconstruction term calculation unit $L_{IR}$. This unit calculates the image reconstruction term $L_{IR}$ by comparing, for the considered sample, the sample image Is and the reconstructed view(s) Rs,k calculated for the respective additional image(s) Ik of the sample.

The image reconstruction term $L_{IR}$ can for instance be calculated as a supervisory signal as follows, based on the differences (or discrepancy) between the considered sample image Is and the calculated reconstructed view(s) Rs,k:
As a first possibility, if only one reconstructed view Rs,k is calculated, the image reconstruction term Lrec can be calculated as:

$$L_{IR} = Lp$$

where Lp is a photoconsistency error between the considered sample image Is and its reconstructed view Rs,k. Various functions can be used to calculate Lp. For instance, the standard image dissimilarity measure proposed by reference [3] can be used.

If several reconstructed views Rs,k are calculated, the value of the image reconstruction term Lrec can be obtained as the average, or preferably as the minimum, of the respective values Lp obtained for the respective reconstructed views Rs,k.

In a preferred embodiment illustrated by Fig.5, the sample comprises three images Is-1, Is and Is+1, and only two reconstructed views are used to calculate the image reconstruction term Lrec for the sample image Is:

- the reconstructed view Rs,s+1, based on the sample image Is and the image Is+1 at time point ts+1 (the image acquired immediately after the sample image Is), and
- the reconstructed view Rs,s-1, based on the sample image Is and the image Is-1 at time point ts-1 (the image acquired immediately before the sample image Is).

The supervised semantic segmentation term $L_S$

As semantic segmentation term $L_S$, any loss term suitable to train a semantic map estimator such as the scene description estimator SDE can be used. In most cases, the semantic segmentation term $L_S$ can use for instance a cross-entropy function.

The semantic segmentation term $L_S$ may be calculated for instance as the following bootstrapped cross-entropy function:

$$L_S = - \frac{1}{|\Omega|.|X|} \sum_{p \in X} \sum_{c \in C} y(p,c) \log(\hat{y}(p,c))$$

where $y(p, c)$ is 1 if ground truth at pixel p belongs to class c and 0 otherwise
$\hat{y}(pc)$ is the soft-max score predicted by the scene description head SDH for class c at pixel p
$\Omega$ is the set of all pixels in the batch, and
the set of hard pixels H is defined as follows:

$$H = \left\{ |p| - \frac{1}{|C|} \sum_{c \in C} y(p,c) \log(\hat{y}(p,c)) > \tau \right\}$$

where $\tau$ is an adaptive cross-entropy value threshold set at top k-th cross-entropy score within a batch.

A detailed presentation of how to calculate the semantic segmentation loss $L_S$ can be found in reference [8].
When the pre-training has been completed, system 200 is ready for operation.

Operation and on-line training

In operation, during successive iterations (or inferences), system 200 iteratively calculates scene descriptions DSs, depth maps Ds and/or camera motion estimations CMs in real time, at successive time points ts, based on successive images acquired at successive time points.
Among these successive iterations, each iteration may be an adaptation iteration. It is possible otherwise that only a subset of iterations be adaptation iterations.

The loss function $L_{adapt}$

A major feature of a prediction system or method according to the present disclosure is the adaptation loss function $L_{adapt}$ used to train at least the shared layer(s) during the adaptation iterations.
During an adaptation iteration, the shared layer(s), and in the present case all the trainable units are trained jointly using an adaptation loss function $L_{adapt}$. Although the trainable units are trained jointly, in operation at step S80 these different units can be used independently.
In order to train system 200 to consistently calculate scene descriptions, depth maps and camera motions, the adaptation loss function $L_{adapt}$ includes, in the present embodiment, the above-mentioned image reconstruction term $L_{IR}$, and preferably as well as a regularization term $L_{Reg}$.
As for the pre-training, the image reconstruction term calculation unit $L_{IR}C$ is used to calculate the image reconstruction term $L_{IR}$.
The regularization term $L_{Reg}$ is an optional term of the adaptation loss function $L_{adapt}$. However, it has been observed using such term substantially improves the performance of the prediction system.
The loss function $L_{adapt}$ may for instance be given by the equation (E) below:

$$L_{adapt} = L_{IR} + \alpha\, L_{Reg} \qquad (E1)$$

where $\alpha$ is a parameter.

The loss function $L_{adapt}$ may also include other terms in order to further improve the performance, for instance terms based on other cues such as optical flow, etc.

The image reconstruction term $L_{IR}$ used during the on-line training is the same as the image reconstruction term $L_{IR}$ defined above with respect to pre-training.

The regularization term $L_{Reg}$ is calculated by a regularization term calculation unit $L_{Reg}C$.

The regularization term $L_{Reg}$ is introduced in the adaptation loss function $L_{adapt}$ in order to optimize the joint training of the shared layer(s), and in particular of the scene description estimator SDE. More precisely, this term is used in order to ensure that the scene description estimator correctly predicts scene descriptions, while the image reconstruction term $L_{IR}$ is used in order to improve the geometrical correctness of the representation learned by the depth map estimator DME.

The regularization term is preferably used in embodiments in which probability value(s) is or are attributed to pixels (usually to all the pixels) of semantic maps which constitute scene predictions outputted by the scene description estimator SDE.

In some embodiments, a single probability value, called 'confidence level' is attributed to each of said pixels in addition to a predicted value. In this case, the confidence level represents the confidence that the predicted value (the predicted semantic class) is the right one for the points of the scene which corresponds to the considered pixel.

In other embodiments, several probability values (also called probabilities) are attributed to each of said pixels, each of these probability values being associated with a specific corresponding predicted value. For instance, for each pixel, the predicted values are semantic classes of objects to which the point of the scene which corresponds to the considered pixel corresponds (the classes can be e.g. 'road', 'tree', 'pole', etc.). The probability values in this case, for a considered pixel and for a considered semantic class, represent the confidence (i.e., a predicted probability) that the point in the scene which corresponds to the considered pixel belongs to the considered semantic class.

In the embodiments in which probability value(s) is/are attributed to pixels of a scene description as explained above, calculating the value of the adaptation loss function ($L_{adapt}$) for a sample at step S54 may include the following steps, for a considered sample:

First, the scene description SDs is calculated, based on the sample image Is. This scene description is calculated by inputting the sample image Is into an instance of the scene description estimator SDE, which outputs the scene description SDs.

In some embodiments, in this calculation, the instance of the scene description estimator SDE is the 'current' scene description estimator, that is, the instance of the scene description estimator which has been updated at the latest adaptation iteration (that is, with its weights as updated at the latest adaptation iteration). It has appeared indeed that calculating the confidence regularization term $L_{CR}$ based on a scene description calculated in this manner, rather than on a scene description calculated with older instances of the scene description estimator, may improve the training and consequently, may contribute to increase the performance of the prediction system.

However, in alternative embodiments (as it will be explained below) another instance SDE* of the scene description estimator, obtained by replicating the current instance SDE of the scene description estimator is used to calculate the regularization term $L_{reg}$, in addition to the current instance SDE.. Said replicated instance is an instance of the scene description estimator SDE whose weights remain fixed over several iterations, so as to reduce computation time. During operation, typically a certain number of adaptation iterations are successively performed, all using the same said former instance SDE* of the scene description estimator to calculate the regularization term. Usually periodically (e.g. every 100 adaptation iterations), the replicated instance SDE* of the scene description estimator is updated, so as to be equal to the atest value of the scene description estimator. These alternative embodiments may in some cases be more efficient to train the prediction system than the ones described above.

Based on the calculated scene description SDs, a high-confidence set X is determined. This high confidence set X comprises the pixels of the scene description SDs, called 'high confidence pixels', for which the probability value (or at least the highest predicted probability value) exceeds a threshold. This threshold can be predetermined, or can be calculated.

When the high-confidence set X has been determined, the regularization term $L_{Reg}$ is calculated.

In some embodiments, the regularization term is a confidence regularization terme $L_{CR}$, which is calculated based on probabilities predicted for the high confidence pixels. This confidence regularization term $L_{CR}$ is defined so that during the adjustment step S60, the parameters are adjusted so as to increase the highest predicted probability, for the high confidence pixels.

Accordingly, the confidence regularization term $L_{CR}$ may be defined as any term which forces the predictions outputted by the scene description head SDH, for the high confidence pixels, to remain at least as confident (as high) as the previous predictions.

For instance, as in the present embodiment, the confidence regularization term $L_{CR}$ can be calculated as:

$$L_{CR} = -\frac{1}{|\Omega|.|C|} \sum_{p \in X} \log\left(\max_{c \in |C|}(\hat{y}(p,c))\right) \quad (E2)$$

where

C is the predetermined set of semantic classes (poles, road, trees,..) predicted by the scene description head SDH
X is the set of high confidence pixels.

The term "$\max_{c \in |c|}(\hat{y}(p,c))$" can thefore be called the 'highest predicted probability', or mor simply, the confidence, for a considered pixel p.

The high confidence set X is defined on the basis of the predictions outputted by an instance of the scene description estimator SDE.

For instance, the high confidence set X may be defined as comprising the pixels for which $\max_{c \in c} \hat{y}(p,c) > \gamma_c$, with $\gamma_c$ having a predetermined value (e.g. 0.99).

As an alternative, the high confidence set X may be defined as comprising the predetermined proportion of pixels which have the highest predicted probabilities. In this case, it is possible to identify a certain value, namely, a 'threshold value', which is such that the high confidence pixels are all the pixels whose highest probability value is above said threshold value. Accordingly, as one may therefore understand, various criteria can be used to determine or define the high confidence set X.

Operation and on-line training

As explained before, in the present embodiment, the trainable unit(s) are trained continuously (during the adaptation iterations) during exploitation.

At each adaptation iteration, this training is performed based on:

- newly acquired data, forming a 'current sample', which relate to the current time point tj (for the iteration i=j) and one or more past time points (e.g., tj-2 and tj-1), and
- one or more past sample(s), which usually relate(s) to former time points that are before the current time point tj (possibly a long time before, e.g. more than 3 seconds, or more than 10 seconds).

Using past samples is optional, but is done in the present embodiment in order to help perform continuous adaptation of the trainable unit(s) during the training steps, while avoiding overfitting and/or catastrophic forgetting.

The past samples are stored in a database called replay buffer (RB; also called sometimes experience buffer). Accordingly, the replay buffer stores sequences of images previously acquired by the camera. These sequences can be very short, and for instance may be constituted by only three images.

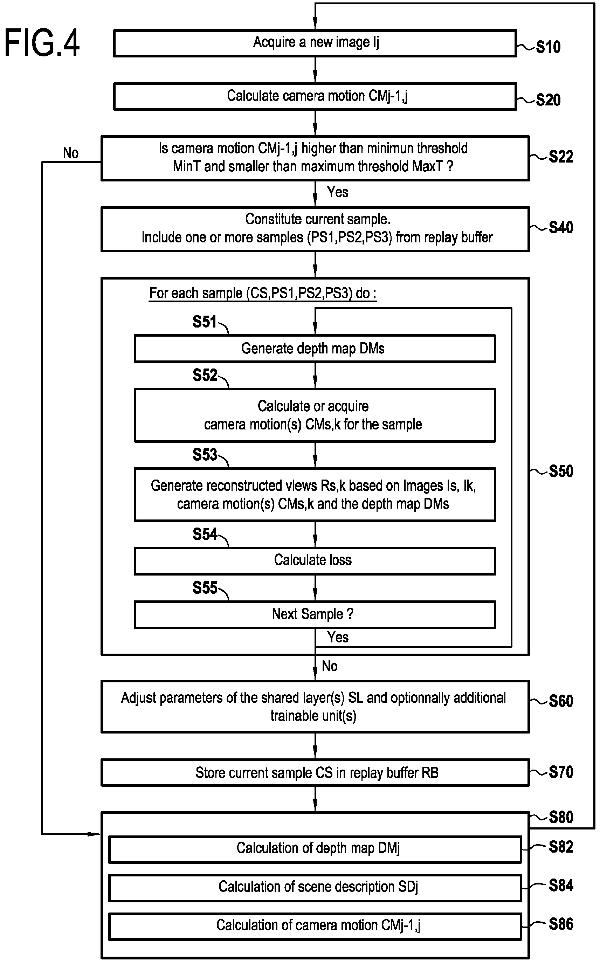

Embodiments of a prediction method according to the present disclosure will now be presented in relation with Figs.4 and 5.

This method comprises multiple iterations or loops. At each loop (or iteration) an index i of the loop is incremented.

The method comprises the following two core steps S10 and S80, which are repeated iteratively at each loop (i=j) in order to calculate the current scene description SDj, the current depth map Dj and the current motion Mj-1,j of the camera:

S10) Acquisition of an image Ij, called 'the current image', outputted by the camera 121 at the current time point tj; and
S80) Prediction, for the current time point tj, of a current scene description SDj, a depth map DMj and a current camera motion CMj-1,j, based (at least) on the current image Ij.

More precisely, at step S80, step(s) S82, S84 and/or S86 is performed.

Step S82 consist in inputting the current image Ij to the depth map estimator DME so as to output the depth map DMj of the scene.

Step S84 consists in inputting the current image Ij to the scene description estimator SDE so as to output scene description(s) SDj of the scene based on the current image Ij.

Step S86 consists in inputting the current image Ij to the camera motion estimator CME so as to output a camera motion CMj-1,j of the camera between a past time point and the current time point tj.

While in the present example, the camera motion is calculated between the most recent time point tj-1 and the current time point tj, the camera motion may be calculated over a different time period.

The depth map DMj, the scene description map SDj and the camera motion CMj-1,j calculated at step S80 may be used as an input for various functions for vehicle 10.

In addition, system 200 is trained on-line in order to adapt in real time its trainable unit(s) to the specific domain in which system 200 (that is, vehicle 1) is operated.

In this purpose, either each iteration, or selected iterations, is an adaptation iteration, in which additional steps are performed in order to train the trainable unit(s) of system 200.

In the embodiment presented here, the first adaptation iteration may only be performed when the two core steps have already been executed at least twice (for the first two values of the index i, that is, for i=0 and i=1). At the end of these two initial iterations, the images I0 and I1 have been acquired, and are therefore available at step i=2 to constitute a first current sample comprising images 10, I1 and 12.

After this initialisation, when an adaptation iteration for i=j (j>1) takes place, at a current time point tj, the prediction method comprises carrying out the following training steps S20, S22, S40, S50, S60 and S70 after step S10 (steps S20, S22, S70 are optional in the adaptation iteration).

These steps will now be described in relation with the first embodiment shown on Fig.4.

S20. Current camera motion calculation

At step S20, the current value of the camera motion $Mj-1,j$ is calculated by the camera motion estimator CME. The camera motion $Mj-1,j$ represents an estimated value of the motion of the camera between the previous time point $tj-1$ and the current time step tj; this value is calculated based on the last acquired image $Ij-1$ and the current image Ij. Other methods can be used to acquire the current camera motion $Mj-1,j$, for instance, using an inertial measurement unit (IMU).

S22. Determination of whether the current camera motion $Mj-1,j$ is above a minimum threshold or below a maximum threshold

Then, it is determined whether the current camera motion $Mj-1,j$ is above a minimum threshold MinT. Here, it must be understood that the 'current camera motion' in the previous sentence means broadly a value representative of a norm of the current camera motion. In some embodiments, the value of the translation of (that is, the distance travelled by) the camera is used as the current camera motion for the comparison performed at this step.

In addition, it may be further determined whether the camera motion is below a maximum threshold MaxT. Indeed, if the distance travelled between two iterations is too high, or if the rotation of the camera between the two images is too high, trying to train the trainable units of system 200 based on the current image Ij may be useless.

If it is determined that the camera motion is below the minimum threshold MinT or above the maximum threshold MaxT, it is considered that the camera is not moving relative to the scene, or is moving too much relative to the scene, and the algorithm jumps to step S70.

Otherwise, it is decided that the current iteration will be an adaptation iteration. In this purpose, in order to train system 200 based on the current image Ij, the algorithm continues at step S40.

S40. Preparation of samples for the adaptation iteration

At step S40, first, training samples are prepared.

These samples comprise a current sample CS, and one or more past samples PS (PS1, PS2, PS3 in the example below).

In the present embodiment, the current sample CS includes:

- the current image Ij, as a first additional image, at the first additional time point tj,
- the image $Ij-1$ acquired at the sample time point $tj-1$, as the sample image, and
- the image $Ij-2$ acquired at the second additional time point $tj-2$, as a second additional image.

In addition, at least one past sample is retrieved from the replay buffer. In some embodiments, two, three past samples or more may be retrieved, to be used for training system 200 during the adaptation iteration.

Using such past samples during the adaptation iteration avoids overfitting the weights of the trainable units to the target domain during the adjustment step S60, and/or avoids catastrophic forgetting.

Preferably, the sample time point of each of the past sample(s) is different from the sample time point of the current sample.

In the present embodiment, three past samples PS1, PS2 and PS3 are retrieved from the replay buffer RB, for three past time points. These past time points can be randomly chosen time points. Preferably, there is at least a 10 seconds period between two of these past time points, so that the past samples be different from each other.

In this embodiment, each sample comprises a sample image Is, and two additional images Is-1 and Is+1, acquired respectively at the additional time points ts-1 and ts+1.

When the training samples (the current sample CS and one or more past samples PS) have been prepared, system 200 is trained. This implies a preparatory step S50 and a training step S60.

S50 Preparatory step for preparing the training

To prepare the training of the depth- and camera motion- estimators, for each sample, the following steps are carried out:

S51. Generation of the depth map

At step S51, in order to calculate the depth map Ds at the sample time point ts, the sample image Is is inputted to the depth map estimator DME, which outputs a predicted depth map Ds.

S52. Determination of the camera motions

In order to calculate the reconstructed view at the sample time ts, for the sample image Is and for each additional image Ik included in the sample, the camera motion Ms,k between the sample time point ts and the time point tk is determined. If the value of the camera motion Ms,k is already available to system 200 (for instance it is included in a sample retrieved at step S40), this previously obtained value can be used; otherwise, at step S52 the camera motion Ms,k is calculated. It can be calculated for instance on the basis of images Is and Ik.

S53. Generation of the reconstructed view(s)

At step S53, for the sample image Is and for each additional image Ik, a reconstructed view Rs,k is calculated.

In this embodiment, as mentioned above, each sample comprises the sample image Is and the two additional images Is-1 and Is+1. Accordingly, at step S53, for each calculated depth map Ds, two reconstructed views Rs,s-1 and Rs,s+1 are calculated. The reconstructed views Rs,k are calculated by a reconstructed view calculation unit RVC.

S54. Loss calculation

Then, at step S54 the value of the loss function $L_{adapt}$ is calculated for each sample. In this first embodiment, at step S54 the regularization term $L_{CR}$ is calculated based on a latest instance SDE of the prediction model, adjusted during the latest adaptation iteration. The regularization term $L_{Reg}$ may be for instance the above-mentioned confidence regularization term $L_{CR}$, calculated using equation (E2) above.

S55. End-of-loop check

Then, at step S55, it is determined whether the training preparatory steps S51-S54 have to be executed for another sample or not.

When the preparatory steps S51-S54 have been executed for all samples, for instance, for the current sample CS and the past samples PS1, PS2 and PS3, the algorithm continues at step S60.

S60. Adjustment of system 200

Then, based on the values of the loss function L, calculated for each of the samples, the weights of the trainable units are updated by backpropagation. The updated weights are calculated by minimizing (or possibly maximizing) the sum of the values of the loss function $L_{adapt}$ for all the samples.

S70. Backup of the current sample CS

The current sample CS is then saved in the replay buffer RB.

S80. Prediction for the current time point tj, of a depth map DMj and/or of the current camera motion Mj-1,j

The prediction step S80 is then executed, after the adjustment step S60 has been completed: Steps S82, S84 and/or S86 is/are performed.

The current scene description SD, the current depth map DMj and the current camera motion Mj-1,j are calculated for the current time point tj, using system 200, whose parameters (at least part of them) have been adjusted at step S70.

After step S80, the algorithm then is resumed at step S10.

A second embodiment of prediction method according to the present embodiment is illustrated by Fig.5. Unless otherwise specified, this second embodiment is identical to the first embodiment shown on Fig.4.

The main distinguishing feature of this second embodiment is that the regularization term $L_{Reg}$ used in the loss function is or at least may be different from the confidence regularization term $LR_{CR}$ used in the loss function of the system of Fig.4.

In addition, in the second embodiment the regularization term $L_{Reg}$ is calculated based on a duplicated instance SDE* of the scene description estimator SDE.

In this purpose, the second embodiment, compared with the first embodiment, comprises an additional step S30. Step S30 is a step in which the adaptation iteration is prepared.

At step S30, the following steps are performed:

S32) It is determined whether it is a first iteration (that is, a 'frozen iteration index' fii has not yet been initialized). If the answer is Yes, the algorithm continues at step S36, otherwise, the following step S34 is performed.

S34) It is determined whether the frozen iteration index fii has reached its maximum value Max_it. If the answer is Yes, the algorithm continues at step S36, otherwise, the value of the frozen iteration index fii is incremented of 1, and the algorithm jumps to step S40.

S36) The frozen iteration index fii is initialized by setting its value to 0. The algorithm then continues to step S38.

S38) A new instance SDE* of the scene description estimator SDE, called the replicated scene description estimator, is generated. This instance SDE* is set to be the latest instance of the scene description estimator SDE, as adjusted during the latest adaptation iteration. Then, the value of the frozen iteration index fii is incremented of 1, and the algorithm jumps to step S40.

The following steps of the algorithm are essentially identical to the corresponding steps of the first embodiment, except the following difference at step S54.

In step S54 of the first embodiment, during each adaptation iteration, during step S54 the regularization term $L_{Reg}$ is the confidence regularization term $L_{CR}$, which is calculated based essentially on the latest instance SDE of the scene description estimator .

By contrast in the second embodiment, during steps S54 the regularization term $L_{Reg}$ is calculated based not only on the latest instance SDE of the scene description estimator, but also on its replicated instance SDE*.

Various methods can be used for calculating $L_{Reg}$.

For instance, in some embodiments, in an adaptation iteration, step S54 includes:

inputting the sample image Is to the duplicated scene description estimator SDE* so as to output a scene description SD*s of the scene based on the sample image Is;
determining a high-confidence set X*, comprising pixels of the scene description SD*s based on the sample image for which at least one predicted probability $(y(SDE *))$ outputted by the replicated scene description estimator SDE* is above a threshold; and
calculating the regularization term $L_{Reg}$ based on probabilities $(\hat{y}(SDE))$ predicted for the pixels (p) of the high confidence set X*.

These latter probabilities $(\hat{y}(SDE))$ are based on the high confidence set X* (and are therefore calculated based on the replicated scene description estimator SDE*), but are calculated as predictions of the latest instance SDE of the scene description estimator.

The adaptation loss function $L_{adapt}$ is then calculated, using the regularization term $L_{Reg}$. This regularization term $L_{Reg}$ is defined so that during the adjustment step S60, the parameters of the current scene description estimator are adjusted so as to increase the highest predicted probability, for each pixel of the high confidence set X*.

As shown by the above example, in some embodiments the regularization term $L_{CR}$ is calculated based on both the current instance SDE of the scene description estimator, and on a replicated instance SDE* thereof.

Another possible implementation in this case is that, during an adaptation iteration, step S54 includes:

inputting the sample image Is to the current scene description estimator SDE so as to output a scene description SDs of the scene based on the sample image Is;
inputting the sample image Is to the duplicated scene description estimator SDE* so as to output a scene description SD*s of the scene based on the sample image Is;
determining a high-confidence set X*, comprising pixels of the scene description SD*s based on the sample image for which at least one predicted probability SD* outputted by the recalculated scene description estimator SDE* is above a threshold; and

calculating the regularization term $L_{Reg}$ based on probabilities predicted for the pixels (p) of the high confidence set X*, as a function of a norm of a difference D between the probabilities ($\hat{y}(SDE)$) predicted by the current instance SDE of the scene description estimator, and the probabilities ($y(SDE*)$) predicted by the replicated instance SDE* thereof.

Accordingly, the confidence regularization term can be expressed as a function of the following difference D:

$$D = || \hat{y}(SDE) - \hat{y}(SDE*) || \quad (E3)$$

where ∥ ∥ is a norm (for instance Euclidean), or any other dissimilarity measure or distance function.

The adaptation loss function $L_{adapt}$ is then calculated, using the regularization term $L_{Reg}$. This regularization term $L_{Reg}$ is defined so that during the adjustment step S60, the parameters are adjusted so as to minimize a difference between probability(ies) ($\hat{y}(SDE)$) predicted by the current instance SDE of the scene description estimator, and corresponding probability(ies) ($y(SDE*)$) predicted by the replicated instance SDE* thereof, for each pixel of the high confidence set X*. In that step S60, the predictions SD*s for the pixels of the high-confidence set X* are therefore used as ground truth values.

Due to steps S32-S38, the replicated scene description estimator SDE is updated only once every Max_it adaptation iterations; conversely, it remains fixed or frozen during the preceding Max_it iterations. Consequently, during these preceding iterations, the regularization term $L_{CR}$ is always calculated using the replicated scened description estimator updated at step S38.

In some embodiments, the regularization term $L_{reg}$ can be defined based on the above equation (E3), but without calculating the high-confidence set X. In this case, the regularization term $L_{reg}$ can be calculated for all the pixels, instead of only for the pixels of the high-confidence set X.

Moreover, calculating the regularization term $L_{reg}$ in this manner advantageously can be done not only when the scene description comprises probabilistic values, but for all types of scene descriptions.

The above methods and the corresponding systems are further illustrated by Figs. 6 to 9. These figures show in particular the main flows of data retrieved, calculated, exchanged during an adaptation iteration executed at a time point ts+1 (i=s+1), on a considered sample.

On each one of these figures, the left part shows the preparation of the data constituting the different samples (step S40): On one hand, three past samples PS1, PS2 and PS3 are prepared, based on data retrieved from the replay buffer RB. In addition, the current sample CS is prepared based on the images Ij-2, Ij-1 and Ij outputted by the camera 121.

Then, each of these samples undergoes the same process (steps S50, S60) shown on the central part of Figs.6-9.

This process is illustrated in the case of a generic sample for a generic sample time point ts, which comprises a sample image Is, and two additional images Is-1 and Is+1.

The left part of these figures shows, on the upper part, acquiring three past samples PS1, PS2 and PS3 from a replay buffer BF; and on the lower part, forming a current sample CS by adding a current image Ij acquired by camera 121 at the considered time point tj to two previously acquired Ij-1 and Ij-2.

In the case of the current sample CS, for which i=j (the current time point is tj), the image Ij-1 acquired at the previous time point is used as the sample image Is: s=j-1. Accordingly, the current image Ij and the image Ij-2 are the two additional images. Consequently, the images Is-1, Is and Is+1 are actually, in the current sample CS, the images Ij-2, Ij-1 and Ij.

The center and right parts of these figures show how a generic sample is processed by prediction system 200.

The preparatory steps S51-S55 of step S50 are carried out in order to prepare all the data necessary to calculate the value of the loss function for the considered sample:

On the left, the triplet of images Is-1, Is, and Is+1 is inputted to the scene description estimator SDE, the depth map estimator DME and the camera motion estimator CME.

At step S51, the sample image Is is inputted to the depth map estimator DME, which on this basis calculates the depth map Ds for the sample image Is.

At step S52, the camera motion estimator CME calculates the camera motions Ms,s-1 and Ms,s+1, based on images Is and Is-1, and on Is, Is+1 respectively.

At step S53, the reconstructed view calculation unit RVC calculates the reconstructed views Rs,s-1, and Rs,s+1.

At step S54, the value of the adaptation loss function $L_{adapt}$ for the considered sample is calculated.

In this purpose, the image reconstruction term calculation unit $L_{IR}C$ calculates the image reconstruction term $L_{IR}$, based on the reconstructed views Rs-1,s and Rs,s+1.

The regularization term calculation unit $L_{Reg}C$ calculates the regularization term $L_{Reg}$, based on the predicted scene description SDs for the sample image Is.

The parameters adjustment unit PA then calculates the value of the loss function $L_{adapt}$ for the considered sample based on above cited equation (E1).

The preparatory steps of step S50 are performed for each of the samples, that is, for the current sample CS and for each of the past samples PS1, PS2 and PS3.

The parameters adjustment unit PA then calculates the aggregated value of the loss function $L_{adapt}$ for all the considered samples by adding the respective values of the loss function for the respective samples CS, PS1, PS2 and PS3.

The parameters adjustment unit PA finally updates the values of the weights of system 200 which have to be updated are updated by backpropagation (step S60, broken lines A on Figs.6-9). Finally, the current sample CS is stored in the replay buffer (step S70, arrow B on Figs.6-9).

Results

The proposed method has been tested using two types of datasets:

- a source dataset, used for pre-training the prediction system
- a target dataset, which represents the actual, real world domain in which the prediction system (that is, vehicle or robot) will be exploited.

As a source dataset, a synthetic dataset has been used; in particular, the Virtual Kitti database (see reference [2]).

As a target dataset, real datasets have been used, in particular the Kitti database (see reference [4]).

The table below presents comparative results that have been obtained for different embodiments of the prediction system 200 of Fig.5.

In this system, as explained before the scene description head SDH is configured to perform semantic segmentation in order to classify the pixels of an inputted image into the following semantic classes: Road, Building, Pole, Traffic light, Traffic sign, Vegetation, Terrain, Sky, Car, and Truck.

The performance of the different embodiments of system 200 is evaluated based on their capacity to perform semantic segmentation. For this reason, the columns of the table below correspond to the above-listed semantic classes, to which a 'mean' column has been added in which the mean value of all the other columns is indicated.

The lines of table correspond to different embodiments of system 200 which are being compared. These embodiments have the same architecture (the architecture shown on Fig.5), but have been trained in different manners:

- the 'Source' prediction system (which does not correspond to the present disclosure) has been pre-trained using the source dataset, and is then evaluated on the target dataset.
- the 'Online UDA' prediction system (which illustrates the present disclosure) has been pre-trained on the source dataset, is then trained on-line on the target dataset, using an adaptation loss function $L_{adapt}$ which does not include the confidence regularization term $L_{CR}$, and is finally evaluated on the fly on the target dataset.
- the 'Online UDA + CR' prediction system (which illustrates the present disclosure) has been pre-trained on the source dataset, is then trained on-line on the target dataset, using an adaptation loss function $L_{adapt}$ which (by contrast with the Online UDA system) includes the confidence regularization term $L_{CR}$, and is evaluated on the fly on the target dataset.

Reference is further made to a fourth embodiment of system 200:

- the 'Baseline' prediction system (which does not correspond to the present disclosure), which has been pre-trained on the source dataset, then trained on the target dataset without using the source dataset during this training phase, and is then evaluated on the target dataset.

|  | Road | Building | Pole | Tr.light | Tr.sign | Vegetation | Terrain | Sky | Car | Truck | Mean |
|---|---|---|---|---|---|---|---|---|---|---|---|
| Offline Source | 58,0 | 53,0 | 42,6 | 26,9 | 25,4 | 61,5 | 16,4 | 87,4 | 68,1 | 10,4 | 45,0 |
| Offline Baseline | 89,7 | 66,0 | 40,1 | 34,1 | 30,4 | 83,1 | 62,1 | 90,6 | 83,4 | 9,9 | 59,0 |
| Online UDA | 86,7 | 48,5 | 41,0 | 36,6 | 28,4 | 74,4 | 50,6 | 86,9 | 80,8 | 23,2 | 55,7 |

(continued)

|  | Road | Building | Pole | Tr.light | Tr.sign | Vegetation | Terrain | Sky | Car | Truck | Mean |
|---|---|---|---|---|---|---|---|---|---|---|---|
| Online UDA+CR | 87,8 | 51,2 | 40,3 | 35,7 | 30,4 | 76,6 | 55,5 | 88,4 | 81,6 | 26,9 | 57,3 |

In each box, this table shows the percentage of pixels which have been correctly classified in the considered class, by the considered prediction system (calculated Intersection-Over-Union (IoU)).

The IoU values shown in the above table, for a considered semantic class C, are calculated as True_Positives/(True_Positives+False_Negatives+False_Positives), where:

'True positives' is the number of pixels correctly classified in class C;
'False positives' is the number of pixels classified in class C, but belonging to different class in reality (i.e., according to ground truth data); and
'False negatives' is the number of pixels which belong to class C in reality, but were erroneously classified in an other class.

This table shows that the methods and systems according to the present disclosure achieve performances, for on-line unsupervised domain adaptation, comparable to state-of-the-art offline methods. In particular, the proposed algorithm reaches 57.3% mean intersection over union (IoU) when adapting from Virtual KITTI v2 to KITTI, which is comparable to 59.0% achieved by the 'baseline' system.

As shown by this table, the method and systems of the present disclosure make it possible to carry out on-line unsupervised domain adaptation. This purpose can be reached even without including the regularization term $L_{Reg}$ in the adaptation loss function $L_{adapt}$, because the depth information and the semantic class are entangled features.

However, using the regularization term $L_{Reg}$ in the adaptation loss function $L_{adapt}$ globally improves the performance, as evidenced by the difference between the last two lines of the table.

In addition, the performance gain caused by using the replay buffer (that is, using past sample(s) in addition to the current sample for the on-line training, rather than only current samples) has also been tested. These tests have shown a performance increase of about 2,5% when the replay buffer is used (in these experiments, 5 past samples were used in each adaptation iteration).

Those skilled in the art will recognize that the present invention may be manifested in a variety of forms other than the specific embodiments described and contemplated herein. Accordingly, departure in form and detail may be made without departing from the scope of the present invention as described in the appended claims.

**Claims**

1. A computer-implemented prediction method for iteratively predicting a depth map (DMj), scene description(s) (SDj) and/or a camera motion (CMj-1,j), based on a current image (Ij);

   a scene description (SDj) of a scene in the real world being a data structure comprising information characterizing the scene;
   the method comprising iteratively:

   S10) acquiring a current image (Ij) of a scene in the real world from a camera (121) at a current time point (tj);
   S80) performing at least one of the following steps:

   S82) inputting the current image (Ij) to a depth map estimator (DME) so as to output a depth map (DMj) of the scene;
   S84) inputting the current image (Ij) to a scene description estimator (SDE) so as to output scene description(s) (SDj) of the scene based on the current image (Ij);
   S86) inputting the current image (Ij) to a camera motion estimator (CME) so as to output a camera motion (CMj-1,j) of the camera between a past time point and the current time point (tj);

   a camera motion (Ms,k) of the camera between a first time point (t1) and a second time point (t2) being a motion of the camera (121) between a position thereof at the first time point (t1) and a position thereof at the second time point (t2);

wherein in at least one iteration, called an adaptation iteration, the method comprises, after the acquisition step S10, performing steps S40, S50 and S60 of:

S40) acquiring at least one sample, said sample including a sample image (Is) acquired from the camera at a sample time point (ts), and at least one additional image (Ik) acquired from the camera at an additional time point (tk) different from the sample time point (ts), said at least one sample including a current sample (CS), which is a sample comprising the current image (Ij);

S50) for each acquired sample, performing preparatory steps in view of adjusting parameters of at least shared layer(s)(SL), said shared layer(s) being shared layer(s) common at least to the scene description estimator (SDE) and to the depth map estimator (DME), the preparatory steps comprising:

S51) inputting the sample image (Is) of the considered sample to the depth map estimator (DME) so as to output a depth map (DMs) based on the sample image (Is) ;

S52) for each additional image (Ik) of the considered sample, calculating or acquiring a camera motion (CMs,k) between the sample time point (ts) and the additional time point (tk) of the additional image (Ik);

S53) for each additional image (Ik) of the considered sample, generating a reconstructed view (Rs,k) for the sample image (Is), based on the additional image (Ik);

a reconstructed view (Rs,k) for the sample image (Is) representing a view of the scene as could be imaged by the camera from a position of the camera at the sample time point (ts);

the reconstructed view (Rs,k) for the sample image (Is) based on a certain additional image (Ik) being calculated on the basis of the certain additional image (Ik), the depth map (Ds) for the sample image (Is), and the camera motion (CMs,k) between the sample time point (ts) and the additional time point (tk) of the certain additional image (Ik); and

S54) calculating the value of an adaptation loss function (L$_{adapt}$) for the considered sample, the adaptation loss function (L$_{adapt}$) including an image reconstruction term (L$_{IR}$) that represents a per-pixel photoconsistency error between the sample image (Is) acquired at the sample time point (ts) and said at least one reconstructed view (Rs,k) for the sample image (Is) generated based on the at least one additional image (Ik);

S60) adjusting parameters of at least the shared layer(s) (SL), based on value(s) of the adaptation loss function (L$_{adapt}$) calculated for said at least one sample.

2. The prediction method according to claim 1, wherein a scene description (SDj) of a scene outputted by the scene description estimator (SDE) is a data structure comprising data associating information relative to point(s) in the scene with pixel(s) of the image.

3. The prediction method according to claim 2, wherein scene description(s) (SDj) based on an image outputted by the scene description estimator (SDE) include a normal map of the image and/or a semantic map.

4. The prediction method according to claim 2 or 3, wherein a scene description (SDj) of a scene outputted by the scene description estimator (SDE) is a map comprising, for each pixel of the map, at least a predicted probability for a point in the scene corresponding to the considered pixel to take up a certain value, or comprises predicted probabilities for said point in the scene to take up respectively certain values.

5. The prediction method according to claim 4, wherein

calculating the value of the adaptation loss function (L$_{adapt}$) for a considered sample at step S54 includes:

inputting the sample image (Is) to an instance of the scene description estimator (SDE) so as to output a scene description (SDs) of the scene based on the sample image (Is);
determining a high-confidence set (X), comprising pixels of the scene description (SDs) based on the sample image for which at least one predicted probability is above a threshold; and
calculating a confidence regularization term (L$_{CR}$) based on probabilities predicted for the pixels (p) of the high confidence set (X);

the adaptation loss function (L$_{adapt}$) includes the confidence regularization term L$_{CR}$; and
the confidence regularization term (L$_{CR}$) is defined so that during the adjustment step S60, the parameters are adjusted so as to increase the highest predicted probability, for each pixel of the high confidence set (X).

6. The prediction method according to claim 5, wherein
during each adaptation iteration, at step S54 the confidence regularization term ($L_{CR}$) is calculated based on a latest instance (SDE) of the scene description estimator, adjusted during the latest adaptation iteration.

7. The prediction method according to any one of claims 1 to 5, wherein

the adaptation loss function ($L_{adapt}$) includes a regularization term $L_{Reg}$;
the method comprises a setting step (S38) of setting a replicated scene description estimator (SDE*) to be a latest instance of the scene description estimator (SDE), adjusted during the latest adaptation iteration;
during step S54 of each adaptation iteration, the regularization term ($L_{Reg}$) is calculated based on predictions ($\hat{y}(SDE*)$) outputted by the replicated scene description estimator (SDE*); and
a plurality of adaptation iterations are performed between two successive performances of the replicated scene description estimator setting step S38.

8. The prediction method according to any one of claims 1 to 7, wherein the scene description estimator (SDE) comprises at least one scene description head (SDH1,SDH2), and step S84 comprises:

inputting the current image (Ij) to the scene description estimator (SDE);
transmitting data obtained on the basis of the inputted current image (Ij) to the shared layer(s) (SL);
processing said transmitted data with the shared layer(s) (SL) to so as to output an image latent feature (ILFj); and
processing said image latent feature (ILFj) through said at least one scene description heads (SDH1,SDH2) to yield said scene description(s)(SD1j,SD2j).

9. The prediction method according to any one of claims 1 to 8, wherein

the sample acquisition step S40 includes acquiring at least one past sample (PS1,PS2,PS3);
each past sample (PS1,PS2,PS3) including a sample image (Is) acquired from the camera at a sample time point (ts), and at least one additional image (Ik) acquired from the camera at an additional time point (tk) different from the sample time point (ts);
in each of the at least one past sample (PS1,PS2,PS3),
at step S50, the preparatory steps are executed for each past sample that has been acquired at step S40; and
at step S60, the parameters of at least the shared layer(s) (SL) are adjusted further based on the value(s) of the loss function ($L_{adapt}$) calculated for the said at least one past sample (PS1,PS2,PS3).

10. The prediction method according to any one of claims 1 to 9, wherein the camera motion estimator (CME) is a machine-learning based unit; and the method comprises, at said parameters adjustment step S60, further adjusting parameters of the camera motion estimator (CME).

11. One or more computer program(s) comprising instructions which, when the instructions are executed by a computer, cause the computer to carry out the steps of a prediction method according to any one of claims 1 to 10.

12. A non-transitory computer readable medium (111), having the one or more computer program(s) according to claim 11 stored thereon.

13. A computer-implemented prediction system (200) for iteratively predicting a depth map (Dj), scene description(s) (SDj) and/or a camera motion (Mj-1,j), based on a current image (Ij);
the prediction system (200) comprising one or more processors (112) and a computer-readable medium (111) according to claim 12.

14. A mobile machine (10), for instance a vehicle or a robot, comprising a camera (121) and a computer-implemented prediction system (200) according to claim 13, the computer-implemented prediction system (200) being configured to acquire images from the camera (121).

FIG.1

$I_j$

FIG.2

$DM_j$

FIG.3

FIG.4

Acquire a new image Ij ～S10

Calculate camera motion CMj-1,j ～S20

Is camera motion CMj-1,j higher than minimun threshold
MinT and smaller than maximum threshold MaxT ? ～S22

No

Yes

Constitute current sample.
Include one or more samples (PS1,PS2,PS3) from replay buffer ～S40

For each sample (CS,PS1,PS2,PS3) do :

S51
Generate depth map DMs

S52
Calculate or acquire
camera motion(s) CMs,k for the sample

S53
Generate reconstructed views Rs,k based on images Is, Ik,
camera motion(s) CMs,k and the depth map DMs

S54
Calculate loss

S55
Next Sample ?

Yes

～S50

No

Adjust parameters of the shared layer(s) SL and optionnally additional
trainable unit(s) ～S60

Store current sample CS in replay buffer RB ～S70

～S80

Calculation of depth map DMj ～S82

Calculation of scene description SDj ～S84

Calculation of camera motion CMj-1,j ～S86

# FIG.5

Acquire a new image Ij — S10

Calculate camera motion CMj-1,j — S20

Is camera motion CMj-1,j higher than minimun threshold MinT and smaller than maximum threshold MaxT ? — S22

No

Yes

Preparation of adaptation iteration — S30

First iteration ? — S32

No

Has frozen iteration index fii reached Max_it ? — S34

Yes | Yes | No

Initialize frozen iteration index fii = 0 — S36

Set replicated scene description estimator to be latest version of scene description estimator — S38

Constitute current sample.
Include one or more samples (PS1,PS2,PS3) from replay buffer — S40

For each sample, perform preparatory steps — S50

No

Adjust parameters of the shared layer(s) SL and optionnally additional trainable unit(s) — S60

Store current sample CS in replay buffer RB — S70

— S80

Calculation of depth map DMj — S82

Calculation of scene description SDj — S84

Calculation of camera motion CMj-1,j — S86

FIG.6

FIG.7

FIG.8

FIG.9

Europäisches
Patentamt

European
Patent Office

Office européen
des brevets

**EUROPEAN SEARCH REPORT**

**Application Number**

**EP 21 20 5121**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KUZNIETSOV YEVHEN ET AL: "CoMoDA: Continuous Monocular Depth Adaptation Using Past Experiences", 2021 IEEE WINTER CONFERENCE ON APPLICATIONS OF COMPUTER VISION (WACV), [Online] 3 January 2021 (2021-01-03), pages 2906-2916, XP055916578, DOI: 10.1109/WACV48630.2021.00295 ISBN: 978-1-6654-0477-8 Retrieved from the Internet: URL:https://openaccess.thecvf.com/content/ WACV2021/papers/Kuznietsov_CoMoDA_Continuo us_Monocular_Depth_Adaptation_Using_Past_E xperiences_WACV_2021_paper.pdf> [retrieved on 2022-04-29] | 1-4,7-14 | INV. G06T7/579 |
| A | * abstract * * page 2909 * * page 2910 * * figure 2 * | 5,6 | |
| | ————— | | TECHNICAL FIELDS SEARCHED (IPC) |
| X | TINGHUI ZHOU ET AL: "Unsupervised Learning of Depth and Ego-Motion from Video", ARXIV.ORG, CORNELL UNIVERSITY LIBRARY, 201 OLIN LIBRARY CORNELL UNIVERSITY ITHACA, NY 14853, 25 April 2017 (2017-04-25), XP080765482, DOI: 10.1109/CVPR.2017.700 | 1-4,7-14 | G06T |
| A | * abstract * * page 2 - page 3 * * page 4 * * figures 2-4 * | 5,6 | |
| | ————— | | |
| | -/-- | | |

| | | | |
|---|---|---|
| The present search report has been drawn up for all claims | | |
| Place of search | Date of completion of the search | Examiner |
| Munich | 29 April 2022 | Luca, Mihai Bogdan |

EPO FORM 1503 03.82 (P04C01)

page 1 of 2

Europäisches
Patentamt

European
Patent Office

Office européen
des brevets

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | VITOR GUIZILINI ET AL: "Geometric Unsupervised Domain Adaptation for Semantic Segmentation", ARXIV.ORG, CORNELL UNIVERSITY LIBRARY, 201 OLIN LIBRARY CORNELL UNIVERSITY ITHACA, NY 14853, 30 March 2021 (2021-03-30), XP081920009, | 1-4,7-14 | |
| A | * abstract * <br> * page 3 * <br> * page 4 * <br> * figure 2 * | 5,6 | |
| A | US 2021/065391 A1 (TRAN QUOC-HUY [US] ET AL) 4 March 2021 (2021-03-04) <br> * the whole document * | 1-14 | |

TECHNICAL FIELDS
SEARCHED    (IPC)

The present search report has been drawn up for all claims

| Place of search | Date of completion of the search | Examiner |
|---|---|---|
| Munich | 29 April 2022 | Luca, Mihai Bogdan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 20 5121

This annex lists the patent family members relating to the patent documents cited in the above-mentioned European search report.
The members are as contained in the European Patent Office EDP file on
The European Patent Office is in no way liable for these particulars which are merely given for the purpose of information.

29-04-2022

| Patent document cited in search report | Publication date | Patent family member(s) | Publication date |
|---|---|---|---|
| US 2021065391 A1 | 04-03-2021 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **TINGHUI ZHOU ; MATTHEW BROWN ; NOAH SNAVELY ; DAVID G.LOWE.** Unsupervised learning of depth and ego-motion from video. *Proceedings of the IEEE Conference on Computer Vision and Pattern Recognition,* 2017, 1851-1858
- **YOHANN CABON ; NAILA MURRAY ; MARTIN HUMENBERGER.** *Virtual kitti,* 2020, vol. 2
- **CLÉMENT GODARD ; OISIN MAC AODHA ; GABRIEL J BROSTOW.** Unsupervised monocular depth estimation with left-right consistency. *Proceedings of the IEEE Conference on Computer Vision and Pattern Recognition,* 2017, 270-279
- **ANDREAS GEIGER ; PHILIP LENZ ; CHRISTOPH STILLER ; RAQUEL URTASUN.** Vision meets robotics: The kitti dataset. *International Journal of Robotics Research (IJRR),* 2013
- **CLÉMENT GODARD ; OISIN MAC AODHA ; MICHAEL FIRMAN ; GABRIEL J BROSTOW.** Digging into self-supervised monocular depth estimation. *Proceedings of the IEEE/CVF International Conference on Computer Vision,* 2019, 3828-3838
- **VITOR GUIZILINI ; JIE LI ; RARES AMBRUS ; ADRIEN GAIDON.** Geometric unsupervised domain adaptation for semantic segmentation. *arXiv preprint arXiv:2103.16694,* 2021
- **IOFFE, S. ; SZEGEDY, C.** Batch normalization: Accelerating deep network training by reducing internal covariate shift. *International conference on machine learning,* June 2015, 448-456
- **ZIFENG WU ; CHUNHUA SHEN ; ANTON VAN DEN HENGEL.** Bridging category-level and instance-level semantic image segmentation. *arXiv preprint arXiv: 1605.06885,* 2016